(19) 
Europäisches
Patentamt
European
Patent Office
Office européen
des brevets

(11) **EP 4 299 323 A1**

(12) **EUROPEAN PATENT APPLICATION**
published in accordance with Art. 153(4) EPC

(43) Date of publication:
**03.01.2024 Bulletin 2024/01**

(21) Application number: **21928043.5**

(22) Date of filing: **16.11.2021**

(51) International Patent Classification (IPC):
**B41J 2/21** *(2006.01)*   **C09D 11/326** *(2014.01)*
**B41M 5/00** *(2006.01)*

(52) Cooperative Patent Classification (CPC):
**B41J 2/21; B41M 5/00; C09D 11/322; C09D 11/326**

(86) International application number:
**PCT/JP2021/042019**

(87) International publication number:
**WO 2022/180949 (01.09.2022 Gazette 2022/35)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.02.2021 JP 2021028997**

(71) Applicant: **Sakata INX Corporation
Osaka-shi, Osaka 550-0002 (JP)**

(72) Inventors:
• **KONISHI, Hiroyuki
Osaka-shi, Osaka 550-0002 (JP)**

• **WATANABE, Yuya
Osaka-shi, Osaka 550-0002 (JP)**
• **NODA, Ryuta
Osaka-shi, Osaka 550-0002 (JP)**
• **MURAKAMI, Masaki
Osaka-shi, Osaka 550-0002 (JP)**
• **HIRAKAWA, Satoshi
Osaka-shi, Osaka 550-0002 (JP)**

(74) Representative: **Grünecker Patent- und
Rechtsanwälte
PartG mbB
Leopoldstraße 4
80802 München (DE)**

(54) **WHITE INK COMPOSITION**

(57) An object is to obtain a white ink which is easy to redisperse and is re-dispersible by being shaken several tens of times with weak force at most, or alternatively, without being shaken. As a solution, a white ink composition is provided which contains 50.0% by mass or less of a titanium oxide pigment treated with silica, alumina, and contains an organic compound in a solid content of the white ink composition, and contains 5.0 parts by mass or more of an alkali-soluble resin whose weight-average molecular weight is 28,000 to 100,000 relative to 100 parts by mass of the titanium oxide pigment, and further contains a water-dispersible resin and water.

# EP 4 299 323 A1

## Description

## Technical Field

The present invention relates to a white ink composition.

## Background Art

It is well known that a styrene acrylic-based resin and various kinds of dispersants are blended into a white ink composition as described in Patent Literatures 1 and 2. However, properties of a precipitate, particularly when a titanium oxide pigment precipitates, have not yet been examined.

## Background Art Literature

## Patent Literature

Patent Literature 1: Japanese Patent Laid-open No. 2021-4368
Patent Literature 2: Japanese Patent Laid-open No. 2022-84072

## Summary of the Invention

## Problems to Be Solved by the Invention

Prior art white ink compositions tend to cause sedimentation and cause precipitation with the passage of time particularly in cases where the compositions contain titanium oxide. Additionally, it is difficult to easily redisperse the titanium oxide, etc. even by shaking the sedimented ink composition, and it is difficult to redisperse unless being shaken hundreds of times with strong force.

Therefore, there has been a desire to obtain a white ink which is easy to redisperse and is re-dispersible by shaking a white ink composition several tens of times with weak force at most, or alternatively without shaking the white ink composition.

## Means for Solving the Problems

After studying in earnest to achieve the aforementioned object, the inventors of the present invention found that the aforementioned object could be achieved by being made into a specific composition, and eventually completed the present invention.

To be specific, the present invention encompasses the following:

1. A white ink composition containing:

50.0% by mass or less of a titanium oxide pigment treated with silica, alumina, and an organic compound in a solid content of the white ink composition;
5.0 parts by mass or more of an alkali-soluble resin whose weight-average molecular weight is 28,000 to 100,000 relative to 100 parts by mass of the titanium oxide pigment; and
a water-dispersible resin and water.

2. The white ink composition according to 1, wherein the alkali-soluble resin whose weight-average molecular weight is 28,000 to 100,000 has a ratio, by mass of constituting monomers, of (styrene)/(alkyl ester of radical polymerizable unsaturated carboxylic acid with 8 or more carbon atoms)/((meth)acrylic acid) in a range of (35 to 55)/(25 to 35)/(15 to 35).

3. The white ink composition according to 1 or 2, wherein the alkali-soluble resin whose weight-average molecular weight is 28,000 to 100,000 has an acid value of 40 mgKOH/g or more.

4. The white ink composition according to any one of 1 to 3, containing 40.0 to 80.0% by mass of a water-dispersible resin in a solid content of the white ink composition.

5. The white ink composition according to any one of 1 to 4, wherein the water-dispersible resin is an acrylic-based resin and/or a styrene acrylic-based resin whose acid value is 20 mgKOH/g or less.

2

6. The white ink composition according to any one of 1 to 5, being intended for inkjet.

**Effects of the Invention**

The present invention has an effect that once precipitated pigment and resin are easily re-dispersible in the white ink composition containing titanium oxide as a coloring pigment.

**Mode for Carrying Out the Invention**

The white ink composition of the present invention is described in order below.

First, a glass transition temperature and a weight-average molecular weight in the present invention are defined as follows.

<Glass Transition Temperature>

Under the present invention, the glass transition temperature of a resin, when the resin is an acrylic-based copolymer resin, is a theoretical glass transition temperature obtained by Wood's equation below.

$$\text{Wood's equation: } 1/Tg = W1/Tg1 + W2/Tg2 + W3/Tg3 + \cdots\cdots + Wx/Tgx$$

[In the equation, Tg1 to Tgx represent the glass transition temperatures of homopolymers comprising the resin's constituent monomers 1, 2, 3 ⋯ x, respectively, W1 to Wx represent the polymerization ratios of monomers 1, 2, 3 ⋯ x, respectively, and Tg represents the theoretical glass transition temperature. It should be noted that, in Wood's equation, glass transition temperatures are absolute temperatures.]

The glass transition temperature of a resin, when the resin is other than an acrylic-based copolymer resin, is a theoretical glass transition temperature obtained by a thermal analysis. The thermal analysis method conforms to JIS K7121 (a method of measuring a transition temperature of plastics) and, and as an example, the glass transition temperature can be measured using the Pyris 1 DSC manufactured by PerkinElmer, Inc., under the conditions of 20°C/min in rate of temperature rise and 20 mL/min in flow rate of nitrogen gas.

<Weight-Average Molecular Weight>

The weight-average molecular weight of the resin in the present invention is measurable with the Gel Permeation Chromatography (GPC) method. As an example, using Water2690 (Waters Corporation) as a GPC system, PLgel, 5 μ, MIXED-D (Polymer Laboratories Inc.) as a column, a chromatography is carried out to obtain as a weight-average molecular weight in terms of polystyrene under conditions of tetrahydrofuran as a developing solvent, 25°C in column temperature, 1 mL/min in flow rate, an RI detector, 10 mg/mL in sample injection concentration, and100 μL in injection volume.

<Titanium Oxide Pigment Treated with Silica, Alumina, and Organic Compound>

As a titanium oxide pigment treated with silica, alumina, and an organic compound which is usable in the present invention, a well-known one is usable. In particular, the amount of silica, aluminum, and organic material in the pigment is preferably such an amount within which a titanium oxide content in the titanium oxide pigment falls within a range of 90-98% by mass. A mean particle diameter of the titanium oxide pigment is preferably 0.15-0.30 μm.

As such titanium oxide pigment, it is possible to use PF-690, PF-691, PF-711, PC-3, CR-80, CR-90, CR-90-2, CR-93 (ISHIHARA SANGYO KAISHA, LTD.), etc.

Such titanium oxide pigment is preferably 15.0% by mass or more, more preferably 20% by mass or more, and even more preferably 25.0% by mass or more in solid content of the white ink composition of the present invention (a sum of the pigment and a resin content). It is also preferably 50% by mass or less, more preferably 40% by mass or less, and even more preferably 35% by mass or less.

(Titanium Oxide Pigment other than Titanium Oxide Pigment Treated with Silica, Alumina, and Organic Compound)

A titanium oxide pigment other than the titanium oxide pigment treated with silica, alumina, and an organic compound is usable as long as the effects of the present invention are not impaired. Titanium oxide not subjected to a surface treatment may be used, a titanium oxide pigment whose surface is treated with silica, alumina, zirconia, and an organic silicon compound may be used. And, an average particle size of the titanium oxide pigment is preferably 0.15-0.30 μm.

Examples of surface-treated titanium oxide may include R-960 (silica-coated titanium oxide pigment) (DuPont de Nemours, Inc.), CR-50, R-630, and R-680 (alumina-coated titanium oxide pigments), R-780, R-850, and R-550 (alumina and silica-coated titanium oxide pigments), CR-50-2, PF-736, and R-980 (alumina and organic material-coated titanium oxide pigments), CR-57 and CR-Super70 (alumina, zirconia and organic material-coated titanium oxide pigments).

<Alkali-Soluble Resin Having Weight-Average Molecular Weight of 28,000 to 100,000>

Examples of the alkali-soluble resin whose weight-average molecular weight is 28,000 to 100,000 used in the present invention may include acrylic-based copolymer resin, maleic acid-based copolymer resin, polyester resin produced by polycondensation reaction, and polyurethane resin. Materials for synthesizing such alkali-soluble resins are disclosed in, for example, Japanese Patent Laid-open No. 2000-94825, and it is possible to use acrylic-based copolymer resin, maleic acid-based copolymer resin, polyester resin, and polyurethane-based resin, etc., which are obtainable using the materials described in this publication. Furthermore, resins obtained using materials other than the above can also be utilized. Any of the foregoing alkali-soluble resins may be used alone, or two or more types may be combined.

The alkali-soluble resin content is 5.0 parts by mass or more, more preferably 10.0 parts by mass or more, and even more preferably 15.0 parts by mass or more relative to 100 parts by mass of the titanium oxide pigment of the present invention, from the viewpoint of enhancing dispersibility of the pigment. The alkali-soluble resin content is preferably 50.0 parts by mass or less, more preferably 40.0 parts by mass or less, even more preferably 35.0 parts by mass or less, and still even more preferably 30.0 parts by mass or less relative to 100 parts by mass of the pigment, from the viewpoint of lowering the viscosity of the white ink composition.

As the acrylic-based copolymer resin, it is possible to use, for example, ones which are obtainable by polymerizing in a solvent a mixture of other monomers copolymerizable with an anionic group-containing monomer in the presence of a standard radical-generating agent (for example, benzoyl peroxide, tert-butyl peroxybenzoate, azobisisobutyronitrile, and the like).

Examples of the anionic group-containing monomer may include monomers having at least one kind of anionic group selected from the group consisting of carboxyl group, sulfonic acid group, and phosphonic acid group. Of these, monomers having a carboxyl group are particularly preferable.

Examples of the aforesaid monomers having the carboxyl group may include acrylic acid, methacrylic acid, crotonid acid, itaconic acid, maleic acid, fumaric acid, 2-carboxyethyl(meth)acrylate, 2-carboxypropyl(meth)acrylate, maleic anhydride, fumaric anhydride, maleic acid half ester. Examples of the aforesaid monomer having the sulfonic acid group may include sulfoethyl methacrylate. Examples of the aforesaid monomers having the phosphonic acid group may include phosphonoethyl methacrylate.

Other monomers copolymerizable with the anionic group-containing monomer preferably contain a hydrophobic group-containing monomer from the viewpoint of improving adsorptivity to the pigment.

As the aforesaid hydrophobic group-containing monomer, examples of monomers having a long-chain alkyl group may include alkyl esters of radical polymerizable unsaturated carboxylic acid with 8 or more carbon atoms, such as (meth)acrylic acid (for example, 2-ethylhexyl(meth)acrylate, octyl(meth)acrylate, lauryl(meth)acrylate, stearyl(meth)acrylate, and 2-hydroxylstearyl(meth)acrylate), alkyl vinyl ethers with 8 or more carbon atoms (for example, dodecyl vinyl ether), vinyl esters of fatty acids with 8 or more carbon atoms (for example, vinyl 2-ethylhexanoate, vinyl laurate, and vinyl stearate); and examples of monomers having an alicyclic hydrocarbon group may include cyclohexyl(meth)acrylate; examples of monomers having an aromatic hydrocarbon group may include styrene-based monomers, such as benzyl(meth)acrylate, styrene, α-methyl styrene, and vinyltoluene. The hydrophobic group-containing units may be used alone, or two or more types may be combined.

As other monomers polymerizable with the anionic group-containing monomer, they can contain a hydrophilic group-containing monomer from the viewpoint of inhibiting cohesion of alkali-soluble resin in aqueous media.

As the hydrophilic group-containing monomer, examples of monomers having a (poly) xylylene chain may include an esterified product of one end alkyl-capped (poly) alkylene glycol, such as methoxy polyethylene glycol, methoxypolyethylene polypropylene glycol, ethoxy polyethylene glycol, ethoxypolyethylene polypropylene glycol, propoxy polyethlene glycol, and propoxy polyethlene polypropylene glycol, and a radical polymerizable unsaturated carboxylic acid, such as (meth)acrylic acid, ethylene oxide adduct and/or propylene oxide adduct to a radical polymerizable unsaturated carboxylic acid, such as (meth)acrylic acid; examples of basic group-containing monomer may include vinylpyrrolidones, such as 1-vinyl-2-pyrrolidone, 1-vinyl-3-pyrrolidone, vinyl pyridines, such as 2-vinylpyridine, 4-vinylpyridine, 5-methyl-2-vinylpyridine, and 5-ethyl-2-vinylpyridine, vinyl imidazole's, such as 1-vinylimidazole and 1-vinyl-2-methylimidazole, vinylpiperidine, such as 3-vinylpiperidine and N-methyl-3-vinylpiperidine, nitrogen-containing derivatives of (meth)acrylic acid, such as dimethylaminoethyl-(meth)acrylate, diethylaminoethyl(meth)acrylate, tert-butylaminoethyl (meth)acrylate, (meth)acrylamino, N-methirole(meth)acrylamide, N-butoxymethyl-(meth)acrylamide, N-methoxy(meth)acrylamide, N-ethoxy(meth)-acrylamide, N-dimethylacrylamide, and N-propylacrylamide; examples of monomers having a hydroxyl group may include hydroxyalkylesters of (meth)acrylic acid, such as hydroxyethyl(meth)acrylate and hydroxypropyl(meth)acrylate; and examples of monomers having an epoxy group may include glycidyl(meth)acrylate. The hydrophilic group-containing monomers may be used alone, or two or more types may be combined.

Examples of copolymerizable monomers besides the aforesaid hydrophobic group-containing monomers and hydrophilic group-containing monomers may include alkylesters of (meth)acrylic acid with less than 8 carbon atoms, such as methyl (meth)acrylate, ethyl (meth)acrylate, propyl (meth)acrylate, isopropyl (meth)acrylate, butyl (meth)acrylate, and hexyl (meth)acrylate. Any of the foregoing other copolymerizable monomers besides hydrophobic group-containing monomers and hydrophilic group-containing monomers may be used alone, or two or more types may be combined.

The alkali-soluble resin is such that, preferably, the ratio, by mass of constituent monomers, of (styrene)/(alkyl ester of radically polymerizable unsaturated carboxylic acid with 8 or more carbon atoms)/((meth)acrylic acid) is in a range of (35 to 55)/(25 to 35)/(15 to 35), or more preferably, that of (styrene)/(lauryl acrylate)/(acrylic acid) is in a range of (35 to 55)/(25 to 35)/(15 to 35).

Or, preferably that of (alkyl ester of (meth)acrylic acid with fewer than 8 carbon atoms)/(acrylic acid)/(methacrylic acid) is (50 to 70)/(15 to 25)/(15 to 25), or more preferably that of (cyclohexyl acrylate)/(acrylic acid)/(methacrylic acid) is in a range of (50 to 70)/(18 to 23)/(15 to 23).

The alkali-soluble resin may use a bi- or higher functional crosslinking agent from the viewpoint of moderately crosslinking the resin to inhibit the cohesion of pigment, or it may not be crosslinked.

The bi- or higher functional crosslinking agent may be one which has two or more reactive functional groups in a molecule in order to react with the functional groups in an alkali crosslinking resin. Examples of the reactive functional group may include epoxy group, hydroxyl group, isocyanate group, amino group, and aziridine group. The bi- or higher functional crosslinking agents may be used alone, or two or more types may be combined.

An acid value of the alkali-soluble resin is preferably 40 mgKOH/g or more, and more preferably 70 mgKOH/g or more, from the viewpoint of enhancing solubility in aqueous media. Also, the acid value of the alkali-soluble resin is preferably 300 mgKOH/g or less, and more preferably 250 mgKOH/g or less, from the viewpoint of improving water resistance of a printed matter. It should be noted that the acid value is a theoretical acid value corresponding to how much potassium hydroxide in milligrams is theoretically required for neutralizing 1 gram of the alkali-soluble resin, arithmetically obtained on the basis of the compositional makeup of monomers used in synthesizing the alkali-soluble resin.

The glass transition temperature of the alkali-soluble resin is preferably 0°C or higher, more preferably 20°C or higher, and even more preferably 40°C or higher, from the viewpoint of improving blocking resistance of a printed matter. The glass transition temperature of the alkali-soluble resin is preferably 100°C or lower, more preferably 80°C or lower, and even more preferably 60°C or lower, from the viewpoint of improving bending tolerance property of a printed matter.

A weight-average molecular weight of the alkali-soluble resin is 28,000 or more, preferably 30,000 or more, and more preferably 33,000 or more, from the viewpoint of improving water resistance of a printed matter. The weight-average molecular weight of the alkali-soluble resin is 100,000 or less, preferably 50,000 or less, and more preferably 40,000 or less, from the viewpoint of improving solubility in aqueous media.

<Water-Dispersible Resin>

As a water-dispersible resin of the present invention, it is possible to employ one or more types selected from acrylic-based resin emulsion, styrene acrylic-based resin emulsion, polyurethane-based resin emulsion, and polyolefin resin-based emulsion.

A ratio of a water-dispersible resin in a solid content (a sum of a pigment and a resin) in the white ink composition of the present invention is preferably 40.0% by mass or more, and more preferably 55.0% by mass or more, from the viewpoint of improving printed image quality and abrasion resistance, and the ratio is preferably 80.0% by mass or less, and more preferably 70.0% by mass or less, from the viewpoint of improving printed image quality and storage stability.

Also, the acid value of the water-dispersible resin is preferably 20 mgKOH/g or less, more preferably 10 mgKOH/g or less, even more preferably 5 mgKOH/g or less, and most preferably 1 mgKOH/g or less, and the acid value may be set to 0 mgKOH/g, from the viewpoint of enhancing acid resistance. It should be noted that the acid value is a theoretical acid value corresponding to how much potassium hydroxide in milligrams is theoretically required for neutralizing 1 gram of the alkali-soluble resin, arithmetically obtained on the basis of a composition of the compositional makeup of monomers used in synthesizing the alkali-soluble resin.

The acrylic-based resin emulsion is a polymer obtained by mixing one type or two or more types selected from the following monomers.

Examples thereof may include (meth)acrylic acid esters with alcohols having alkyl groups with 1 to 18 carbon atoms, 2-hydroxyethyl(meth)acrylate, 2-hydroxypropyl(meth)acrylate, methoxyethyl(meth)acrylate, butoxyethyl(meth)acrylate, glycidyl(meth)acrylate, allyl(meth)acrylate, ethylene glycol di(meth)acrylate, and diethylene glycol di(meth)acrylate. It should be noted that "(meth)acrylate" is a general term of acrylate and methacrylate. Additionally, the following ethylenic unsaturated monomers may be used together with the foregoing. Examples thereof may include acrylonitrile, vinyl acetate, vinyl propionate, styrene, acrylic acid, methacrylic acid, (meth)acrylamide, N-methylol(meth)acrylamide, and N-methoxymethyl(meth)acrylamide.

The styrene acrylic-based resin emulsion is an emulsion in which a styrene acrylic-based resin is dispersed in water, and is manufacturable by emulsion polymerization, dispersion polymerization, suspension polymerization, pulverization, or solution/bulk polymerization, followed by post-emulsification.

Detailed information about this method and stabilizers are described in "Emulsion Polymerization and Emulsion Polymer" (P.A. Lovell, M.S. El-Aasser, John Wiley & Sons Ltd., England, 1977, incorporated in the present specification by reference).

Examples of commercial products of the styrene acrylic-based resin emulsion may include M6963, an acid value of less than 10 mgKOH/g, Japan Coating Resin Co., Ltd.) J-450, J-734, J-7600, J-352, J-390, J-7100, J-741, J-74J, J-511, J-840, J-775, HRC-1645, HPD-71, PDX-6102B, JDX-5050 (styrene acrylic-based resin emulsions, BASF SE), UC-3900 (styrene acrylic-based resin emulsion, TOAGOSEI CO., LTD.) AP4710 (acryl-silicone-based resin emulsion, SHOWA HIGHPOLYMER CO., LTD.), SF460, SF460S, SF420, SF110, SF300, and SF361 (polyurethane-based resin emulsion, Nippon Unicar Company Limited), W-6020, W-5025, W-5661, and W-6010 (polyurethane-based resin emulsion, Mitsui Chemicals, Inc.).

The polyurethane-based resin emulsion is an emulsion in which a polyurethane resin is dispersed in water, and any one of anionic, cationic, and nonionic ones may be used, but anionic and nonionic ones are preferable. Examples of the aforesaid polyurethane resin may include polyether-based polyurethane resin, polyester-based polyurethane resin, polyester/polyether-based polyurethane resin, and polycarbonate-based polyurethane resin. The polyurethane resin emulsions may be used alone, or two or more types may be combined.

Examples of commercial products of the aforesaid polyurethane-based resin emulsion may include "SUPERFLEX210" (DKS Co. Ltd., anionic polyester-based polyurethane resin), "SUPERFLEX130" (DKS Co. Ltd., anionic polyester-based polyurethane resin), "SUPERFLEX500M" (DKS Co. Ltd., nonionic polyester-based polyurethane resin), "SUPERFLEX460" (DKS Co. Ltd., anionic polycarbonate-based polyurethane resin), "Impranil DLP1380" (Sumika Covestro Urethane Co., Ltd., anionic polyester-based polyurethane resin), "Baybond PU407" (Sumika Covestro Urethane Co., Ltd., anionic/nonionic polyester-based polyurethane resin), and "SUPERFLEX420NS" (DKS Co. Ltd., anionic polycarbonate-based polyurethane resin).

The aforesaid polyolefin-based resin emulsion is an emulsion in which a polyolefin-based resin is dispersed in water. Examples of the aforesaid polyolefin resin may include polyethylene resin, polypropylene resin, polybutylene resin, and polyolefin resin obtained by copolymerization of two or more types of ethylene, propylene, and butylene. Also, the polyolefin-based resin may be a modified polyolefin resin obtained by introducing an amino group, a carboxyl group, a hydroxyl group, an acryloyl group, and other polymer chain into a polyolefin chain; an oxidized polyolefin resin obtained by subjecting a part of a polyolefin chain to an oxidization treatment; and a halogenated polyolefin resin obtained by treating a part thereof with halogen. The polyolefin-based resin emulsions may be used alone, or two or more types may be combined.

Examples of commercial products of the aforesaid polyolefin-based resin emulsion may include "CHEMIPEARL S100" (Matsui Chemicals Inc., polyethylene-based resin emulsion), "CHEMIPEARL XEP800H" (Matsui Chemicals Inc., polypropylene-based resin emulsion), and "ARROWBASE TC-4010" (UNITIKA LTD., polypropylene-based resin emulsion).

Besides the acrylic-based resin emulsion, the styrene acrylic-based resin emulsion, the polyurethane-based resin emulsion, and the polyolefin-based resin emulsion, a well-known resin emulsion used for the white ink composition (other resin emulsions) can be incorporated into the resin emulsion of the present invention as long as the effects of the present invention are not impaired. Examples of the other resin emulsions may include polyvinyl acetate-based resin emulsion and polyvinyl chloride-based resin emulsion.

A solid content of each of the acrylic-based resin emulsion, the styrene acrylic-based resin emulsion, the polyurethane resin emulsion, and the polyolefin-based resin emulsion in a solid content of the resin emulsion is preferably 70% by mass or more, more preferably 80% by mass or more, even more preferably 90% by mass or more, and most preferably 95% by mass or more, from the viewpoint of improving coated film resistance, such as abrasion resistance.

<Surfactant>

As a surfactant of the present invention, it is possible to include well-known surfactants used for white ink compositions (other surfactants) as long as the effects of the present invention are not impaired. Examples thereof may include nonionic surfactants, cationic surfactants, anionic surfactants, amphoteric surfactants, and betaine surfactants.

Specifically, for example, silicone-based surfactants, fluorochemical-based surfactants, and acetylene-based surfactants are also usable.

These surfactants are usable either alone or in combination of two or more kinds.

Alkylsulfonate salt is a higher alcohol sulfate salt, and is a compound represented by general formula (1): $R_1SO_3M$ (in general formula (1), $R_1$ is a straight-chain or branched alkyl group or alkenyl group with carbon atoms of 6 or more but 18 or fewer, and M is a cation.). In formula (1), examples of M may include alkaline metal ions, such as sodium and potassium, and ammonium ions. Examples of the aforesaid alkylsulfonate salt may include lauryl sulfate, LATEMUL PS (Kao Corporation), SUNNOL LM-1130 (Lion Corporation), and Sanded LNM (SANYOKASEI CO., LTD.). The alkylsulfonate salts may be used alone, or two or more types may be combined.

The polyoxyethylene alkyl ether sulfate is a compound represented by general formula (2): $R_2O(AO)mSO_3M$ (in formula (2), $R_2$ is a straight-chain or branched alkyl group or alkenyl group with carbon atoms of 6 or more but 18 or fewer, AO is a straight-chain or branched oxyalkylene group with carbon atoms of 2 or more but 4 or fewer, m is an average number of moles added of AO, and M is a cation.). Examples of the aforesaid polyoxyethylene alkyl ether sulfate may include Sanded EN (SANYOKASEI CO., LTD.), SUNNOL LMT-1430 (Lion Corporation), and Adekahope YES-25 (ADEKA CORPORATION). The polyoxyethylene alkyl ether sulfates may be used alone, or two or more types may be combined.

Besides the aforesaid alkylsulfonate and/or polyoxyethylene alkyl ether sulfate as surfactants of the present invention, for example, a silicone-based surfactant, a fluorochemical-based surfactant, and an acetylene-based surfactant are usable as other surfactants.

Examples of silicone-based surfactants may include BYK-347, BYK-377, and BYK-3455 (BYK JAPAN KK.).

Examples of fluorochemical-based surfactants may include F-410, F-444 and F-553 (which are available from DIC Corporation), and FS-65, FS-34, FS-35, FS-31, and FS-30 (which are available from DuPont de Nemours, Inc.).

Examples of acetylene-based surfactants may include one type or two or more types selected from the following commercially available ones whose product names are Surfynol 104E, Surfynol 104H, Surfynol 104A, Surfynol 104BC, Surfynol 104DPM, Surfynol 104PA, Surfynol 104PG-50, Surfynol 420, Surfynol 440, Surfynol 465, Dynol 607, Dynol 609, OLFINE E1004, OLFINE E1010, OLFINE E1020, OLFINE PD-001, OLFINE PD-002W, OLFINE PD-004, OLFINE PD-005, OLFINE EXP.4001, OLFINE EXP.4200, OLFINE EXP.4123, and OLFINE EXP.4300 (Nissin Chemical Co, LTD.).

<Water-Soluble Solvent>

As a water-soluble solvent in the present invention, any well-known water-soluble solvents used for white ink compositions are usable without any special restriction, and examples thereof may include mono alcohols, polyhydric alcohols, lower alkyl ethers of polyhydric alcohol, nitrogen-containing compounds, ketones, ethers, and esters. The water-soluble solvents may be used alone, two or more types may be combined.

Examples of the aforesaid mono alcohols may include methanol, ethanol, 1-propanol, 1-butanol, and 3-methoxy-3-methyl-1-butanol.

Examples of the aforesaid polyhydric alcohols may include ethylene glycol, propylene glycol, glycerin, diethylene glycol, 1,3-butylene glycol, 1,4-butylene glycol, 1,2-pentandiol, 1,5-pentandiol, neopentyl glycol, 1,2-hexanediol, 1,6-hexanediol, 1,2-cyclohexanediol, heptanediol, and 1,8-octanediol.

Examples of the aforesaid lower alkyl ethers of the polyhydric alcohol may include ethylene glycol monomethyl ether, ethylene glycol dimethyl ether, ethylene glycol monoethyl ether, ethylene glycol diethyl ether, ethylene glycol monopropyl ether, ethylene glycol isopropyl ether, ethylene glycol monobutyl ether, ethylene glycol isobutyl ether, propylene glycol monomethyl ether, propylene glycol monoethyl ether, propylene glycol monopropyl ether, propylene glycol monobutyl ether, diethylene glycol monomethyl ether, diethylene glycol monoethyl ether, dipropylene glycol mono-n-propyl ether, and dipropylene glycol mono-n-butyl ether.

Examples of the aforesaid nitrogen-containing compound may include pyrrolidone and N-methyl-2-pyrrolidone.

Examples of the aforesaid ketones may include acetone, methyl ethyl ketone, methyl butyl ketone, methyl isobutyl ketone, diisopropyl ketone, cyclopentanone, and cyclohexanone.

Examples of the aforesaid ethers may include isopropyl ether, n-butyl ether, tetrahydrofuran, tetrahydropyran, and 1,4-dioxane.

Examples of the aforesaid esters may include propylene carbonate, methyl acetate, ethyl acetate, propyl acetate, isopropyl acetate, butyl acetate, isobutyl acetate, amyl acetate, ethyl lactate, ethyl butyrate, dibutyl phthalate, dioctyl phthalate; and cyclic esters, such as ε-caprolactone and ε-caprolactam.

From the viewpoint of reducing drying of an ink composition in an inkjet nozzle and easy formation of an ink layer (film) on a base material, the aforesaid water-soluble solvent preferably includes at least one type selected from the group consisting of mono alcohols, polyhydric alcohols, lower alkyl ethers of polyhydric alcohol, and nitrogen-containing compounds, and more preferably includes at least one type selected from the group consisting of propylene glycol, glycerin, diethylene glycol, ethylene glycol monobutyl ether, diethylene glycol monobutyl ether, and 3-methoxy-3-methyl-1-butanol.

<Water>

Water in the present invention includes water as aqueous media included in a pigment-dispersed liquid described later, water included in the resin emulsion, and water added for controlling a concentration of the white ink composition of the present invention. Examples of the aforesaid water may include ion exchange water, pure water, distilled water, and industrial water. The waters may be used alone, or two or more types may be combined.

A ratio of the water (including water included in individual components) in the white ink composition is preferably 40.0% by mass or more, and more preferably 50.0% by mass or more, from the viewpoint of improving coated film drying properties. The ratio is preferably 70.0% by mass or less, and more preferably 60.0% by mass or less, from the viewpoint of improving discharge stability.

<Basic Compound>

The white ink composition of the present invention preferably includes a basic compound from the viewpoint of dissolving an alkali-soluble resin. Examples of the aforesaid basic compound may include inorganic basic compounds, such as sodium hydroxide and potassium hydroxide; and organic basic compounds, such as ammonia, methyl amine, ethylamine, monoethanolamine, N,N-dimethylethanolamine, N,N-diethylethanolamine, N,N-dibutylethanolamine, diethanolamine, N-methyldiethanolamine, triethanolamine, morpholine, N-methylmorpholine, and N-ethylmorpholine. The basic compounds may be used alone, or two or more types may be combined.

A ratio of the basic compound in the white ink composition of the present invention may be a quantity sufficient to dissolve the alkali-soluble resin in a medium. In general, the ratio is preferably 0.05% by mass or more, and more preferably 0.1% by mass or more, from the viewpoint of enhancing dispersion stability of the alkali-soluble resin, and the ratio is preferably 1% by mass or less, and more preferably 0.5% by mass or less, from the viewpoint of enhancing water resistance of a printed matter.

Furthermore, additives, such as well-known resins, pigment dispersants, antifungal agents, rustproofing agents, thickening agents, antioxidants, UV absorbents, storage improving agents, defoaming agents, and pH adjusting agents, can be added to the white ink composition of the present invention depending on the purpose.

<Method for Preparing White Ink Composition>

A method for preparing (manufacturing) the white ink composition of the present invention is not particularly limited, and it is possible to employ a method including adding the above components sequentially or concurrently, followed by mixing together.

In particular, there is, for example, (1) a method for preparing the white ink composition including: mixing an aqueous resin varnish in which the alkali-soluble resin is dissolved in water in the presence of a basic compound, a pigment, and a pigment dispersant, etc. as needed; and preparing a pigment-dispersed liquid (ink base) by using various types of dispersion machines, such as a ball mill, an attritor, a roll mill, a sand mill, and an agitator mill, followed by adding the remaining materials.

There is also (2) a method for preparing the white ink composition including: dispersing a pigment with the above method; obtaining a resin-coated pigment in which an alkali-soluble resin is deposited on a surface of the pigment by, for example, an acid precipitation method and an ion exchange means described in Domestic Re-publication of International Patent Laid-open No. WO2005/116147; neutralizing the obtained resin-coated pigment with a basic compound, and then redispersing the pigment in water by using various dispersion machines (a high-speed agitator, etc.), followed by adding the remaining materials.

The white ink composition of the present invention preferably has an initial viscosity after manufacturing in a range of 5.0 to 30.0 maps, and more preferably 15.0 to 25.0 maps. Viscosity is measurable by, for example, an E-type viscometer (product name "RE100L-type viscometer, Toki Sangyo Co., Ltd.).

<Primer Composition>

When printing with the white ink composition of the present invention, a primer layer may be previously formed by a primer composition. The primer composition includes cohesion promoter(s) to promote cohesion of the white ink composition. As the primer composition, it is possible to apply, for example, a colorless ink composition described in Japanese Patent Laid-open No. 2009-190379, a primer ink composition described in Japanese Patent No. 6424266, and a primer ink described in Japanese Patent Laid-open No. 2017-88646.

Examples of the aforesaid cohesion promoters may include water-soluble multivalent metal salt, organic acid, and cationic polymer. The cohesion promoters may be used alone, or two or more types may be combined.

Examples of the aforesaid water-soluble multivalent metal salt may include dissociative salts of alkaline earth metals, such as Ca and Mg. Specific examples of the aforesaid water-soluble multivalent metal salt may include calcium nitrate, $CaCl_2$, $Ca(OH)_2$, $(CH_3COO)_2Ca$, $MgCl_2$, $Mg(OH)_2$, $(CH_3COO)_2Mg$, $(HCOO)_2Ca$, and $MgSO_4$. Of these, calcium salt is preferable, and calcium nitrate, $CaCl_2$, $Ca(OH)_2$, and $(CH_3COO)_2Ca$, $(HCOO)_2Ca$ are preferable.

Examples of the aforesaid organic acid may include lactic acid, malic acid, citric acid, oxalic acid, malonic acid, acetic acid, propionic acid, and fumaric acid.

Examples of the aforesaid cationic polymers may include polymers having primary to tertiary amino groups, and polymers having a quaternary ammonium salt group. Specific examples of the aforesaid cationic polymers may include primary to tertiary amino groups and salts thereof, a homopolymer of a monomer (cationic monomer) having a quaternary ammonium salt group, and a copolymer or condensation polymer of cationic monomers and other monomers (hereinafter referred to as "noncationic polymers"). Cationic polymers are usable in the form of either water-soluble polymers or water-dispersible latex particles.

In general, a content of the cohesion promoter is preferably 1% by mass or more in the primer composition, from the viewpoint of improving clarity and bleed resistance of a printed matter, and the content is preferably 15% by mass or less, and more preferably 10% by mass or less in the primer composition, from the viewpoint of improving water resistance of the printed matter.

A primer composition can include a resin emulsion from the viewpoint of improving wear resistance and adhesion of a primer. Resin emulsions preferably have good stability even in the presence of a cohesion promoter, and are usable either alone or in combination of two or more types.

Examples of the aforesaid resin emulsions may include acrylic-based resin emulsions, polyester-based resin emulsions, polyurethane-based resin emulsions, polyvinyl acetate-based resin emulsions, polyvinyl chloride-based resin emulsions, polybutadiene-based resin emulsions, and polyolefin-based resin emulsions. Of these, acrylic-based resin emulsions, polyvinyl acetate-based resin emulsions, and polyolefin-based resin emulsions are preferable.

Examples of the aforesaid acrylic-based resin emulsions may include acrylic resin emulsions, styrene-acrylic-based resin emulsions, acrylic-vinyl acetate-based resin emulsions, acrylic-vinyl chloride-based resin emulsions, acrylic-silicone-based resin emulsions, and acrylic-colloidal silica-based resin emulsions. Of these, styrene-acrylic-based resin emulsions are preferable. A resin included in the acrylic-based resin emulsions preferably has a glass transition temperature of 0°C or lower.

A resin included in the polyvinyl acetate resin emulsion has a glass transition temperature of preferably 0°C or higher but 50°C or lower because the polyvinyl acetate-based resin emulsion has good adhesion with a recording medium.

A chlorinated polyolefin-based resin emulsion obtained by chlorinating and emulsifying a polyolefin-based resin is preferable as the aforesaid polyolefin-based resin emulsion. Examples of the chlorinated polyolefin-based resin emulsion may include chlorinated polypropylene resin emulsions and chlorinated polyethylene resin emulsions, whose degree of chlorination is preferably 5 to 30%.

In general, a resin solid content of the resin emulsion is preferably 0.5% by mass or more, and more preferably 1% by mass or more in a primer composition from the viewpoint of improving adhesion to a base material. And, the resin solid content is preferably 10% by mass or less, and more preferably 5% by mass or less in the primer composition from the viewpoint of improving storage stability.

The primer composition can include a hydrazide compound because adhesion between a primer and a base material can be improved through interaction with a surface of the base material. The hydrazide compound is preferably a dihydrazone compound, and examples thereof may include oxalic acid dihydrazide, malonic acid dihydrazide, succinic acid dihydrazide, glutaric acid dihydrazide, adipic acid dihydrazide, sebacic acid dihydrazide, maleic acid dihydrazide, fumaric acid dihydrazide, and itaconic acid dihydrazide.

In general, the content of the hydrazide compound is approximately 0.2 % by mass or more but 5% by mass or less in a primer composition.

The primer composition can include a surfactant from the viewpoint of improving leveling properties on a base material. The same surfactants as the aforementioned surfactants that can be mixed into the white ink composition are mixable as the surfactant.

Besides the above components, optional components may be mixed as needed into the primer composition. Examples of optional components may include water-soluble organic solvents and various kinds of additives. Examples of additives may include storage improving agents and defoaming agents.

Examples of the aforesaid water-soluble organic solvent may include mono alcohols, polyhydric alcohols, lower alkyl ethers of polyhydric alcohol, ketones, ethers, esters, and nitrogen-containing compounds. It should be noted that it is better not to use a water-soluble organic solvent from the viewpoint of drying properties of a primer layer obtained.

Examples of the aforesaid storage improving agent may include hindered amines, UV absorbents, and antioxidants. Examples of the aforesaid hindered amines may include N-CH3 type, N-H type, and N-OR type. Examples of the aforesaid UV absorbents may include benzophenone-based UV absorbents, benzotriazole-based UV absorbents, salicylate-based UV absorbents, hydroxyphenyl-triazine-based UV absorbents, cyanoacrylate-based UV absorbents, and nickel complex salt-based UV absorbents. Examples of the aforesaid antioxidant may include phenol-based antioxidants, amine-based antioxidants, sulfur-based antioxidants, and phosphorus-based antioxidants.

Examples of the aforesaid defoaming agents may include silicone-based defoaming agents and Pluronic (registered trademark) defoaming agents.

<Manufacturing of Primer Composition>

The primer composition is manufacturable by adding the aforesaid cohesion promoter and, on an as-needed basis, the aforesaid resin emulsion, the aforesaid hydrazide compound, the aforesaid surfactant, the aforesaid water-soluble organic solvent, and various types of additives to water, and by stirring and mixing together by a Disper mixer.

<Printed Matter>

The white ink composition of the present invention is usable as an aqueous inkjet ink composition. Depending on the case, it may be made as an ink set including the primer composition. In the case of using the primer composition, specifically, it is possible to obtain with an image formation method in which a primer layer is formed by applying the primer composition to a base material, followed by drying, and then the aqueous inkjet ink composition is printed on the primer layer by using an inkjet printer. Examples of a coating method for the primer composition may include coating methods using various kinds of coating devices, such as a blade coater, air knife coater, roll coater, bar coater, gravure coater, rod blade coater, lip coater, curtain coater, die coater, and inkjet.

Conventionally well-known conditions are suitably applicable to the printing method with an inkjet. For example, there is an inkjet printing method in which the primer composition (or the aqueous inkjet ink composition) is accommodated in an ink cartridge, and the ink cartridge is attached to an inkjet recording device of single pass method, etc. so as to be injected from a nozzle to a base material (or a primer layer).

Examples of the aforesaid base material may include non-absorbent printing media, such as art paper, inkjet paper, coated paper e.g., inkjet glossy paper, polyolefin film, polyester film, nylon film, plastic-based base material e.g., polyvinyl chloride sheets; uncoated papers, such as plain paper and offset paper; and fabric, such as cotton. Of these, the non-absorbent printing media are preferable, and plastic-based base materials are more preferable.

**Examples**

<Pigments>

CR-90-2 (product name "CR-90-2", titanium oxide treated with silica, alumina, and an organic material, average particle size of 0.25 $\mu$m, DBP oil supply quantity of 20 mL/100 g, ISHIHARA SANGYO KAISHA, LTD.)

JR-809 (product name "JR-809", titanium oxide treated with silica and alumina, average particle size of 0.23 $\mu$m, DBP oil supply quantity of 24 mL/100 g, TAYCA Corporation)

<Alkali-Soluble Resins>

Alkali-soluble resin 1 (a copolymer of styrene/lauryl acrylate/acrylic acid of 40/30/30 with a weight-average molecular weight of 30000, an acid value of 220 mgKOH/g, a glass transition temperature of 55°C)

Alkali-soluble resin 2 (a copolymer of styrene/lauryl acrylate/acrylic acid of 51/30/19 with a weight-average molecular weight of 33500, an acid value of 140 mgKOH/g, a glass transition temperature of 54°C)

Alkali-soluble resin 3 (a copolymer of cyclohexyl acrylate/acrylic acid/methacrylic acid of 65/16/19 with a weight-average molecular weight of 10000, an acid value of 220 mgKOH/g, a glass transition temperature of 50°C)

Alkali-soluble resin 4 (a copolymer of styrene/lauryl acrylate/acrylic acid of 51/30/19 with a weight-average molecular weight of 15000, an acid value of 140 mgKOH/g, a glass transition temperature of 55°C)

<Alkali-Soluble Resin Varnishes>

An alkali-soluble resin varnish 1 was obtained by mixing 25 parts by mass of alkali-soluble resin 1, sodium hydroxide achieving a neutralization equivalent of 100%, and purified water so as to reach 100 parts by mass, and by dissolving this under heating and stirring at 90°C.

An alkali-soluble resin varnish 2 was obtained by mixing 25 parts by mass of alkali-soluble resin 2, sodium hydroxide achieving a neutralization equivalent of 100%, and purified water so as to reach 100 parts by mass, and by dissolving this under heating and stirring at 90°C.

An alkali-soluble resin varnish 2 (60% neutralization) was obtained by mixing 25 parts by mass of alkali-soluble resin 2, sodium hydroxide achieving a neutralization equivalent of 60%, and purified water so as to reach 100 parts by mass, and by dissolving this under heating and stirring at 90°C.

An alkali-soluble resin varnish 3 was obtained by mixing 25 parts by mass of alkali-soluble resin 3, sodium hydroxide achieving a neutralization equivalent of 100%, and purified water so as to reach 100 parts by mass, and by dissolving this under heating and stirring at 90°C.

An alkali-soluble resin varnish 4 was obtained by mixing 25 parts by mass of alkali-soluble resin 4, sodium hydroxide achieving a neutralization equivalent of 100%, and purified water so as to reach 100 parts by mass, and by dissolving this under heating and stirring at 90°C.

<Aqueous White Ink Bases>

An aqueous white ink base 1 was prepared by stirring and mixing 50 parts by mass of CR-90-2, 40 parts by mass of alkali-soluble resin vanish 1, and 10 parts by mass of purified water, followed by kneading with a wet circulation mill.

Aqueous white ink bases 2 to 6 were prepared in the same manner, that is, by stirring and mixing individual pigments, individual alkali-soluble resin vanishes, and purified water as presented in Table 1, followed by kneading with the wet circulation mill.

<Water-Dispersible Resin>

M6963 (product name "M6963," styrene-acrylic-based emulsion (a solid content concentration of 45% by mass), an acid value of less than 10 mgKOH/g, Japan Coating Resin Corporation)

<Solvent>

    Glycerin
    Propylene glycol

<Additive>

E1010 (product name "OLFINE E-1010," acetylenediol surfactant, HLB13, Nissin Chemical Industry Co, LTD.)

<White Ink Compositions>

White ink compositions of Examples and Comparative Examples were obtained by stirring and mixing individual components as presented in Table 2.

Evaluation Method

(Amount of Sediment)

100 g of each of the white ink compositions of Examples and Comparative Examples was loaded and sealed hermetically in a Screw Tube Bottle No. 8, and was left to stand at 40°C for two weeks. Thereafter, this was cooled to 25°C. The amount of sediment of each of the obtained white ink compositions was measured. After measurement, the Screw Tube Bottles No. 8 respectively filled with the white ink compositions were lightly shaken 50 times to measure an amount of remaining sediment (g). The results are presented in Table 2.

[Table 1]

| Aqueous white ink base | 1 | 2 | 3 | 4 | 5 | 6 |
|---|---|---|---|---|---|---|
| CR-90-2 | 50 | 50 | 50 | | 50 | 50 |

(continued)

| Aqueous white ink base | 1 | 2 | 3 | 4 | 5 | 6 |
|---|---|---|---|---|---|---|
| JR-809 | | | | 50 | | |
| Alkali-soluble resin varnish 1 | 40 | | | 40 | | |
| Alkali-soluble resin varnish 2 | | 40 | | | | |
| Alkali-soluble resin varnish 2 (60% neutralization) | | | 40 | | | |
| Alkali-soluble resin varnish 3 | | | | | 40 | |
| Alkali-soluble resin varnish 4 | | | | | | 40 |
| Water | 10 | 10 | 10 | 10 | 10 | 10 |
| Total | 100 | 100 | 100 | 100 | 100 | 100 |

[Table 2]

| | | | Example 1 | Example 2 | Example 3 | Comparative Example 1 | Comparative Example 2 | Comparative Example 3 |
|---|---|---|---|---|---|---|---|---|
| Ink | | Aqueous white ink base 1 | 18.0 | | | | | |
| | | Aqueous white ink base 2 | | 18.0 | | | | |
| | | Aqueous white ink base 3 | | | 18.0 | | | |
| | | Aqueous white ink base 4 | | | | 18.0 | | |
| | | Aqueous white ink base 5 | | | | | 18.0 | |
| | | Aqueous white ink base 6 | | | | | | 18.0 |
| | | M6963 | 45.0 | 45.0 | 45.0 | 45.0 | 45.0 | 45.0 |
| | | Glycerin | 20.0 | 20.0 | 20.0 | 20.0 | 20.0 | 20.0 |
| | | Propylene glycol | 10.0 | 10.0 | 10.0 | 10.0 | 10.0 | 10.0 |
| | | E1010 | 0.2 | 0.2 | 0.2 | 0.2 | 0.2 | 0.2 |
| | | Purified water | 6.8 | 6.8 | 6.8 | 6.8 | 6.8 | 6.8 |
| | | Total | 100.0 | 100.0 | 100.0 | 100.0 | 100.0 | 100.0 |

(continued)

| | | Example 1 | Example 2 | Example 3 | Comparative Example 1 | Comparative Example 2 | Comparative Example 3 |
|---|---|---|---|---|---|---|---|
| Evaluation | Amount of ink sediment/g | 2.4 | 3.6 | 3.3 | 4.3 | 5.8 | 4.2 |
| | Amount of ink sediment/g (after lightly shaken 50 times) | 1.9 | 1.7 | 1.9 | 4.0 | 5.5 | 1.7 |

According to Examples 1 to 3 that are embodiments of the present invention, the amount of solid content in each of the ink compositions sedimented once is relatively small, and most of the sedimented solid content could be redispersed by light shaking.

However, according to Comparative Example 1 using a titanium oxide pigment not being the titanium oxide pigment of the present invention, and Comparative Example 2 using an alkali-soluble resin having a low weight-average molecular weight, a large amount of solid content was sedimented, most of which could not be redispersed by light shaking. According to Comparative Example 3, using an alkali-soluble resin having a high weight-average molecular weight than the alkali-soluble resin used in Comparative Example 2, but still a lower value than the range of the weight-average molecular weight of the present invention, a large amount of solid content was sedimented originally even though most of the solid content could be redispersed by light shaking.

**Claims**

1. A white ink composition comprising:

   50.0% by mass or less of a titanium oxide pigment treated with silica, alumina, and an organic compound in a solid content of the white ink composition;
   5.0 parts by mass or more of an alkali-soluble resin whose weight-average molecular weight is 28,000 to 100,000 relative to 100 parts by mass of the titanium oxide pigment; and
   a water-dispersible resin and water.

2. The white ink composition according to claim 1, wherein the alkali-soluble resin whose weight-average molecular weight is 28,000 to 100,000 has a ratio, by mass of constituting monomers, of (styrene)/(alkyl ester of radical polymerizable unsaturated carboxylic acid with 8 or more carbon atoms)/((meth)acrylic acid) in a range of (35 to 55)/(25 to 35)/(15 to 35).

3. The white ink composition according to claim 1 or 2, wherein the alkali-soluble resin whose weight-average molecular weight is 28,000 to 100,000 has an acid value of 40 mgKOH/g or more.

4. The white ink composition according to any one of claims 1 to 3, comprising 40.0 to 80.0% by mass of a water-dispersible resin in a solid content of the white ink composition.

5. The white ink composition according to any one of claims 1 to 4, wherein the water-dispersible resin is an acrylic-based resin and/or a styrene acrylic-based resin whose acid value is 20 mgKOH/g or less.

6. The white ink composition according to any one of claims 1 to 5, being intended for inkjet.

## INTERNATIONAL SEARCH REPORT

| International application No. |
|---|
| **PCT/JP2021/042019** |

**A. CLASSIFICATION OF SUBJECT MATTER**

*B41J 2/21*(2006.01)i; *C09D 11/326*(2014.01)i; *B41M 5/00*(2006.01)i
FI:  C09D11/326; B41M5/00 120; B41J2/21

According to International Patent Classification (IPC) or to both national classification and IPC

**B. FIELDS SEARCHED**

Minimum documentation searched (classification system followed by classification symbols)

B41J2/21; C09D11/326; B41M5/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | JP 2020-146912 A (TOYO INK SC HOLDINGS CO LTD) 17 September 2020 (2020-09-17) claims 1, 7, paragraphs [0051]-[0055], [0065]-[0074], [0082]-[0086], table 1 (pigment dispersion resin 1), table 3 (pigment dispersion liquid 1), table 5 (white ink 1, 7-10, 53) | 1-6 |
| A | JP 2017-75302 A (KAO CORP) 20 April 2017 (2017-04-20) claims 1, 3, 5, 7, example 8 | 1-6 |
| A | JP 2014-43492 A (TOYO INK SC HOLDINGS CO LTD) 13 March 2014 (2014-03-13) claims 1, 4, paragraphs [0015]-[0034], [0040], examples 12, 13 | 1-6 |
| A | JP 2020-55943 A (SAKATA INKS) 09 April 2020 (2020-04-09) claim 1, paragraphs [0016]-[0022], [0034], [0039], example 7 | 1-6 |

☐ Further documents are listed in the continuation of Box C.       ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **18 January 2022** | **01 February 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2021/042019**

| Patent document cited in search report | | | Publication date (day/month/year) | Patent family member(s) | | | Publication date (day/month/year) |
|---|---|---|---|---|---|---|---|
| JP | 2020-146912 | A | 17 September 2020 | (Family: none) | | | |
| JP | 2017-75302 | A | 20 April 2017 | US | 2018/0311968 | A1 | |
| | | | | claims 1, 3, 5, 13, example 8 | | | |
| | | | | WO | 2017/061340 | A1 | |
| | | | | EP | 3360682 | A | |
| | | | | CN | 108136770 | A | |
| JP | 2014-43492 | A | 13 March 2014 | (Family: none) | | | |
| JP | 2020-55943 | A | 09 April 2020 | WO | 2020/071055 | A1 | |
| | | | | CN | 112752807 | A | |
| | | | | JP | 6640951 | B1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021004368 A
- JP 2022084072 A
- JP 2000094825 A
- WO 2005116147 A

- JP 2009190379 A
- JP 6424266 B
- JP 2017088646 A